# EUROPÄISCHE PATENTANMELDUNG

(11) **EP 1 852 327 A2**
(43) Veröffentlichungstag der Anmeldung: **07.11.2007**
(21) Anmeldenummer: 07008613.7
(22) Anmeldetag: 27.04.2007
(51) Int. Cl.: B62B 3/02, B62B 3/06

(54) **Rollpalette**

(30) Priorität: 02.05.2006 DE 102006020646
(71) Anmelder: Grein, Alexander Hugo, 97896 Freudenberg-Boxtal (DE)
(72) Erfinder: Grein, Alexander Hugo, 97896 Freudenberg-Boxtal (DE)
(74) Vertreter: Pöhner, Wilfried Anton, Dr.

(57) **Zusammenfassung**

Rollpalette zum Transportieren und zum Stapeln von darauf befindlichen Gütern, bestehend aus einem quaderförmigen und plattenförmigen Hohlkörper, dessen Seitenwände aus vier länglichen Profilleisten (2) mit vorzugsweise rechteckigem Querschnitt aufgebaut sind, auf deren Oberseiten eine Deckplatte (3) und auf deren Unterseiten eine Bodenplatte (4) befestigt ist wobei in wenigstens einer Seitenwand eine Öffnung (12) eingebracht ist und im Innenraum an der Unterseite der Deckplatte wenigstens drei Laufrollen (5) befestigt sind, die durch Bodenöffnungen (41) in der Bodenplatte hindurch nach unten ragen und die alle mit ihren Laufflächen auf eine zur Bodenplatte etwa parallele Fahrebene ausgerichtet sind.

## Beschreibung

Die Erfindung bezieht sich auf eine Rollpalette zum Transportieren und zum Stapeln von darauf befindlichen Gütern, bestehend aus einem quaderförmigen und plattenförmigen Hohlkörper, dessen Seitenwände aus vier länglichen Profilleisten mit vorzugsweise rechteckigem Querschnitt aufgebaut sind, auf deren Oberseiten eine Deckplatte und auf deren Unterseiten eine Bodenplatte befestigt ist.

Paletten sind zum Transport und zum Stapeln von sperrigen Gütern, wie Verpackungen, Lebensmitteln, Geräten und ähnlichem weit verbreitet. Sehr oft anzutreffen ist die sogenannte Europalette, bestehend aus mehreren waagerecht angeordneten und zueinander beabstandeten Holzbrettern in zwei Ebenen, die durch massive Kanthölzer miteinander verbunden sind. In den Raum zwischen diesen Kanthölzern können die Gabeln eines Gabelstaplers oder eines anderen Hubfahrzeuges eingeführt werden. Diese und andere, ähnliche Palettenkonstruktionen bieten eine Fläche, auf der die zu transportierenden Güter lösbar befestigt werden können und dadurch mit den standardisierten Transporteinrichtungen bewegt werden können.

Ein Beispiel einer Transportaufgabe ist z. B. ein Sortiment von verschiedenen Waschmittelkartons, das aus unterschiedlichen Größen und Formen zu einer Lieferung zusammengestellt worden sind. Diese Lieferung kann auf einer Palette gestapelt, mit Spanngurten daran befestigt und mit einer Folie oder einer anderen Abdeckung umhüllt werden und so verpackt transportiert werden. Der große Vorteil ist, dass die Kartons bei jeder Station des Transportweges nicht mehr einzeln per Hand in verschiedene Behältnisse umsortiert werden müssen, sondern stets als Einheit auf der Palette hantiert werden können. Der Vorzug, dabei stets auf standardisierte Transporteinrichtungen zurückgreifen zu können, enthält zugleich auch den Nachteil, dass stets ein solches Transporthilfsmittel wie ein aufwändiger Gabelstapler oder zumindest ein Hubwagen vorhanden sein muss. Insbesondere dann, wenn sperrige Güter mit geringem spezifischem Gewicht transportiert werden sollen, ist so eine Transporthilfseinrichtung eigentlich meist viel zu aufwändig, weil sie in der Regel auch für den Transport von gewichtigeren Gütern ausgelegt ist.

Ein Verschieben einer bestückten Palette von Hand ist meistens auch dann nicht möglich, wenn das Gewicht diese Manipulation eigentlich erlauben würde, da ein ergonomisch günstiger Griff fehlt.

Auf diesem Hintergrund hat sich die Erfindung die Aufgabe gestellt, eine Palette zu entwickeln, die selbst nur ein geringes Eigengewicht hat, die mit standardisierten Hubgabeln von Gabelstaplern, Hubwagen oder ähnlichem aufgenommen werden kann, die in ihren Abmessungen standardisierten Systemen entspricht, die vor allem selbst wie ein Wagen auf ebenen Flächen verfahren werden kann, die über ergonomisch günstig angeordnete Griffe zum manuellen Manipulieren verfügt, die in einer Ausstattungsvariante mit einer Zug- und/oder Schiebevorrichtung für das Ziehen oder Schieben durch Bedienpersonen in aufrechter Haltung ausgerüstet ist und die in einer weiteren Ausstattungsvariante gegen unbeabsichtigtes Wegrollen abgesichert werden kann ist.

Als Lösung schlägt die Erfindung eine quaderförmige Rollpalette aus einem Hohlkörper vor, bei der in wenigstens einer Seitenwand eine Öffnung eingebracht ist und im Innenraum an der Unterseite der Deckplatte wenigstens drei Laufrollen befestigt sind, die durch Bodenöffnungen in der Bodenplatte hindurch nach unten ragen und die alle mit ihren Laufflächen auf eine zur Bodenplatte etwa parallele Fahrebene ausgerichtet sind.

Ein wesentliches Merkmal der erfindungsgemäßen Rollpalette ist ihr Aufbau als allseits geschlossener Hohlkörper, der von nur wenigen Funktionsöffnungen durchbrochen ist. Im Unterschied zu den bisher üblichen Paletten wird durch diese Bauform eine erheblich steifere Konstruktion ermöglicht. Dadurch kann bei gleichem Gesamtgewicht wie bei den bisherigen, offenen Konstruktionen die Tragfähigkeit erheblich erhöht werden oder bei gleicher Abmessung und gleicher Tragfähigkeit das Eigengewicht der Palette erheblich reduziert werden. Dadurch ist die unbeladene Palette sehr viel einfacher manuell zu hantieren, z. B. nach Gebrauch zu stapeln.

Die geschlossene Oberfläche erleichtert das Lagern auch kleinerer Gegenstände auf der Palette. Das Eindringen von Fremdkörpern in den Zwischenraum zwischen oberer und unterer Platte der Palette wird erheblich erschwert.

Die glatte Bauweise auch der Unterseite ist ein wichtiger, funktioneller Vorteil beim Stapeln von beladenen Rollpaletten. Da die Laufflächen der Laufrollen nur einen sehr geringen Abstand zur Unterseite der Bodenplatte der Rollpalette haben, kann die gesamte Unterseite der Rollpalette in den Grenzen einer bestimmten Toleranz als eben bewertet werden, obwohl sie auf harten Böden durch die herausragenden Laufflächen rollfähig ist. Deshalb kann auf die Oberseite von einer weichen Nutzlast, wie zum Beispiel aufgeschäumtem Kunststoff, eine zweite Rollpalette direkt aufgesetzt werden. Dank der ebenen Unterseite verteilt sich das Gewicht gleichmäßig auf der darunter befindlichen Ladung. Der geringe Überstand der Rollen wird durch eine reversible Verformung des aufgeschäumten Kunststoffes kompensiert.

Ein weiterer Vorteil der glatten Bauform ist die Reduzierung der Unfallgefahr. Zum einen direkt dadurch, dass die Gliedmaßen der damit arbeitenden Personen kaum noch unbeabsichtigt in die Öffnungen der Palette hineingeraten können, weil deren Anzahl und Größe im Vergleich zu den üblichen Paletten drastisch reduziert ist, zum anderen indirekt dadurch, dass die Gefahr des Verhakens der Palette mit anderen Paletten oder anderen Gegenständen erheblich reduziert wird.

Eine erfindungsgemäße Rollpalette weist jedoch grundsätzlich an den Seitenwänden wenigstens eine Öffnung auf, die zum Bewegen der Palette dient. Für diese Öffnungen werden mehrere Ausführungsformen vorgeschlagen: Eine Variante ist eine Gabelöffnung durch welche die Gabeln eines Stapelfahrzeuges, wie z.B. eines Hubwagens oder eines Gabelstaplers, in den Innenraum des Hohlkörpers einschiebbar sind. Damit wird das Anheben und Bewegen der Palette durch eine Maschine oder eine Vorrichtung ermöglicht.

Eine andere Ausführungsform ist eine Greiföffnung. Im einfachsten Fall entspricht die Greiföffnung in Breite und Höhe einer menschlichen Hand, welche durch die Greiföffnung hindurch eingesteckt werden kann. Damit wird das Bewegen der Palette durch einen Menschen erleichtert, insbesondere das Aufnehmen und Stapeln von leeren Rollpaletten.

Als dritte Ausführungsform der Öffnung in der Seitenwand beschreibt die Erfindung eine Deichselöffnung, durch welche hindurch eine Deichsel als Zug- und/oder Schubeinrichtung teilweise in den Hohlraum eingeführt wird. Damit kann ein Mensch die Palette auf ihren Rädern schieben oder ziehen.

Als weitere Ausführungsformen unter dem Begriff der Öffnung sind dahinter innerhalb des Hohlraumes befestigte Gewinde, Bajonette, Seilklemmen, Poller, Haken, Griffe und/oder andere Formen von Verbindungsmitteln nach aktuellem Stand der Technik denkbar, in welche oder an welche dazu komplementäre Gegenstücke eingeschoben oder angebracht werden, um darüber die Palette zu bewegen.

Die Erfindung bevorzugt, dass diese Verbindungsmittel hinter der Öffnung innerhalb des Innenraumes angeordnet werden, damit das Risiko des Verhaken oder Anstoßens so gering wie nur möglich gehalten wird. Denkbar ist es aber auch, dass die vorgenannten Verbindungsmittel auf der Außenseite der Seitenwand angeordnet werden und die Öffnung in der Seitenwand nur zum Befestigen dieser Verbindungsmittel genutzt wird.

Das wohl wichtigste Merkmal einer erfindungsgemäßen Rollpalette sind jedoch die namensgebenden Rollen. Kern der Idee ist es, diese Laufrollen im Innenraum der Rollpalette unterzubringen und nur mit einem geringen Teil ihrer Lauffläche aus Öffnungen in der Bodenplatte herausragen zu lassen. Wie weit die Laufrollen aus der Bodenplatte herausragen, ist vom Prinzip her frei wählbar und hängt von der gewählten Bauhöhe der Palette sowie der Bauhöhe der Rollen ab. Der Mindestwert für die Bauhöhe der Palette ist durch die Bauhöhe der Gabeln und der dafür normierten Öffnungen vorgegeben. Sollte dieses Maß größer sein als die Bauhöhe der ausgewählten Rollen, so schlägt die Erfindung die Anbringung von Distanzplatten zwischen den Befestigungsflanschen der Laufrollen und der Unterseite der Deckplatte vor. Auf diese Weise kann das Maß des Überstandes der Laufrollen über die Bodenplatte hinaus bestimmt werden.

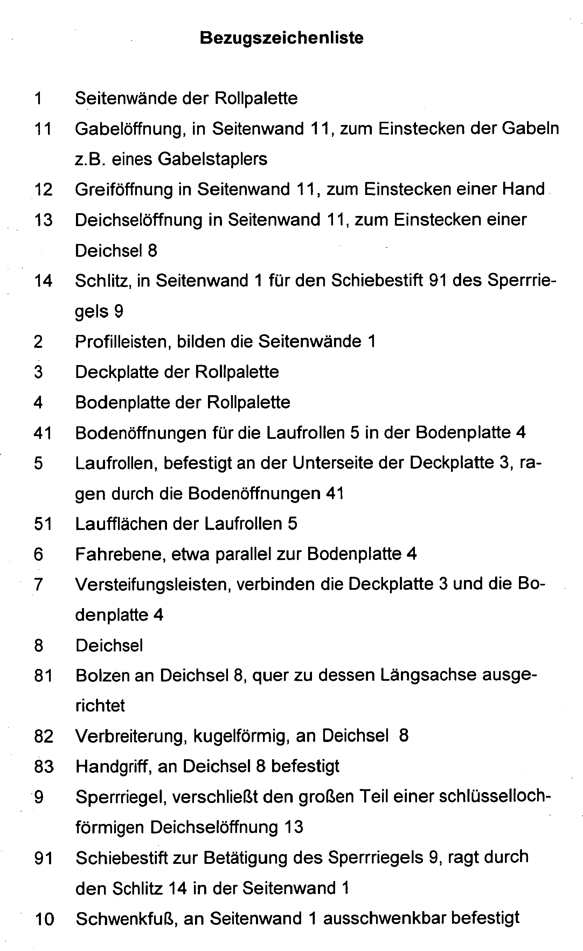

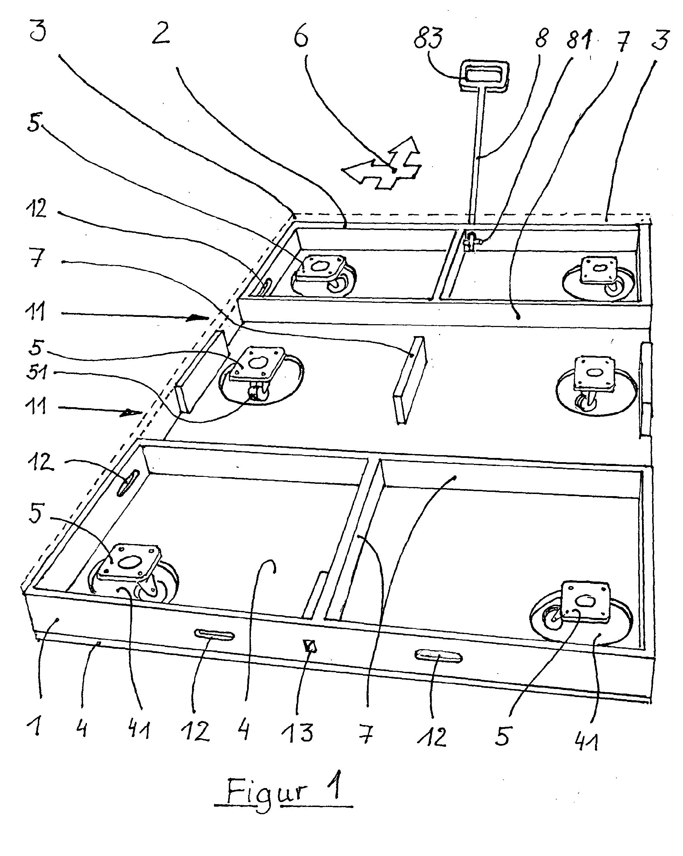

Die Anzahl der Rollen ist variabel. Mindestens drei Rollen sind erforderlich, weil bei einer geringeren Anzahl die Palette mit einer Kante die Fahrebene berühren würde. Die Erfindung bevorzugt jedoch eine höhere Anzahl von Rollen, auf welche sich die Nutzlast verteilt. So ist zum Beispiel in Figur 1 eine Palette mit sechs Rollen gezeichnet. Es ist eine Grunderkenntnis der Physik, dass jeder Körper eine bestimmte Elastizität aufweist. Das gilt auch für die Rollpalette. Aufgrund ihrer Elastizität "hängt" sie zwischen den Rollen um ein geringes Maß "durch". Wenn der Abstand zwischen den Rollen sehr groß gewählt wird, kann es dazu führen, dass die Rollpalette die Fahrebene berührt. Das kann durch das Einfügen weiterer Rollen vermieden werden.

Ein weiterer Vorteil einer großen Anzahl von Rollen ist, dass damit das Überfahren von Wellen in der Fahrebene ohne Berührung möglich wird. In den Grenzen der Elastizität der Rollpalette, der darauf angeordneten Ladung und deren Befestigung wird sich die Rollpalette über der Bodenwelle etwas verformen und/oder neben der Bodenwelle befindliche Rollen werden vorübergehend die Fahrebene nicht mehr berühren.

Wenn die Rollpalette als ein Fahrzeug betrachtet wird, fällt als charakteristisches Merkmal auf, dass die "Bodenfreiheit" sehr gering ist. Ein Vorteil des geringen Abstandes zur befahrenen Ebene ist, dass die Gliedmaßen der Bedienpersonen oder andere Gegenstände nicht ohne weiteres zwischen die Rollpalette und die Fahrebene geraten können.

Die Rollpalette ist also nicht zum Befahren von sehr welligen Flächen oder zum Überwinden von Stufen gedacht sondern zur Verwendung in Industriehallen und Lagerräumen vorgesehen. Deshalb ist es praxisgerecht, davon auszugehen, dass die Böden mit einer sehr guten Toleranz eingeebnet sind. Aus diesem Grunde ist eine Erhöhung der Bodenfreiheit der Rollpalette auch nicht erforderlich.

Die Laufrollen selbst sind ein weit verbreitetes Bauelement im Maschinenbau, bei Möbeln und in der Logistik. Aus der großen Anzahl der serienmäßig lieferbaren Varianten und Baugrößen bevorzugt die Erfindung solche Laufrollen, die einen Montageflansch aufweisen, der unterhalb einer parallel zur befahrenen Fläche ausgerichteten Ebene angeschraubt wird und eine Verschwenkbarkeit um eine senkrecht zur Fahrbahn orientierte Achse zulässt. Der Mittelpunkt der Achse der Laufrolle ist dabei um den sogenannten "Nachlauf" von der Verschwenkachse entfernt. Der Vorteil dieser Anordnung ist, dass sich die Laufrolle bei einer Richtungsänderung durch den Nachlauf selbsttätig auf die jeweils aktuelle Fahrrichtung einstellt.

Eine andere, übliche Variante von Laufrollen ist gegenüber dem Befestigungsflansch nicht verschwenkbar, wodurch die Kosten für das meist mit Kugeln ausgeführte Verschwenklager entfallen. Die teilweise Verwendung solcher Typen von Rollen ist dann sinnvoll, wenn eine vereinfachte Lenkbarkeit einer Rollpalette in Analogie zu Einkaufswagen in Supermärkten oder Gepäckkarren auf Flughäfen angestrebt wird.

Für eine Versteifung der Konstruktion der Palette schlägt die Erfindung vor, dass im Innenraum Versteifungsleisten die Deckplatte und die Bodenplatte miteinander verbinden. Es bietet sich an, dass z. B. hinter der Gabelöffnung der Einsteckraum für die Gabeln durch entsprechende Versteifungsleisten abgegrenzt wird. Diese Versteifungsleisten sind dann parallel zu zwei Außenkanten der Rollpalette ausgerichtet, es ist jedoch ebenso möglich und sinnvoll, auch Versteifungsleisten als Diagonalen einzusetzen oder in anderen Winkeln auszurichten.

In einer alternativen Ausführungsform werden in die Seitenwände der Palette Greiföffnungen eingebracht. Deren Form ist vom Prinzip her beliebig, die Erfindung bevorzugt jedoch Ovale, deren Kanten abgerundet sind und deren Breite auf die Breite von menschlichen Händen abgestimmt ist. Diese Ovale sollten parallel zur Bodenplatte ausgerichtet sein, weil diese Position der natürlichen Haltung der Hand entspricht.

Als weitere vorteilhafte Ausstattungsvariante schlägt die Erfindung vor, dass in wenigstens einer Seitenwand, vorzugsweise in deren Mitte, eine Deichselöffnung eingebracht ist und eine Deichsel vorhanden ist, die durch diese Öffnung hindurch in den Innenraum der Rollpalette hineingesteckt werden und dort befestigt werden kann. Für die Art die Befestigung und die Ausführung der Deichsel sind zahlreiche Varianten denkbar.

Falls die Rollpalette ausschließlich mit verschwenkbaren Rollen ausgerüstet ist, ist es vorteilhaft, die Deichsel fest an der Rollpalette zu fixieren. Dann kann der Bedienmann die Palette drücken und ziehen und auch seitlich schwenken. Dafür ist ein Winkel der Deichsel gegen die Bodenplatte von etwa 45° sinnvoll. Möglichkeiten zur Befestigung der Deichsel an der Rollpalette sind das Einschrauben in einem Gewinde, das Einrasten in einem Bajonettverschluss oder das Einstecken in ein längliches Hohlprofil. Dabei ist u. a. wählbar, ob die Deichsel in sich abgewinkelt ist und die Befestigungsstücke in der Rollpalette orthogonal ausgerichtet sind, oder die Deichsel aus einem geraden Profil wie z. B. einer Holzstange oder einem Metallrohr besteht und das Gegenstück zur Befestigung an der Rollpalette in einem Winkel montiert ist, der eine ergonomisch sinnvolle Ausrichtung der Deichsel ergibt.

Alternativ ist es möglich, die Deichsel an der Rollpalette verschwenkbar zu befestigen. Dabei ist zu bevorzugen, dass - wie z. B. bei Handwagen üblich - die Verschwenkachse der Deichsel quer zur Fahrtrichtung orientiert ist. Diese Variante der Verschwenkbarkeit kann mit vollständig verschwenkbaren Laufrollen kombiniert werden, eine besonders sinnvolle Kombination ist jedoch eine einzige, grade Reihe aus nicht verschwenkbaren, festen Laufrollen, die parallel zueinander ausgerichtet sind mit wenigstens einer voll verschwenkbaren Laufrolle. Diese Konfiguration hat sich z. B. bei Einkaufswagen sehr bewährt und ist auch für Gabelstapler und Hubwagen Stand der aktuellen Technik.

Für die Verschwenkbarkeit der Deichsel gegenüber der Rollpalette ist ein quer zur Deichsel ausgerichteter Bolzen sinnvoll, der in entsprechende Gegenstücke an einer Seitenwand eingreift. Alternativ dazu kann die Deichsel selbst am Ende abgewinkelt werden, z. B. wie ein "L", ein "S" oder ein "T" geformt werden und in dazu komplementäre, an der Rollpalette befestigte Gegenstücke eingehängt werden.

Für ein T-förmig ausgebildetes Deichselende oder einen am Ende der Deichsel eingebrachten Bolzen ist es denkbar, dass als Gegenstück eine Deichselöffnung dient, die als vertikal orientierter Schlitz ausgebildet ist. In diese Öffnung wird der Bolzen oder der quer zur Deichsel orientierte, T-förmige Teil senkrecht eingeführt und im Innenraum um 90° in die Waagerechte verdreht. Wenn dann die Deichsel nach vorne gezogen wird, stützt sich der Bolzen oder das T-Stück an der Innenseite der Seitenwand neben der Deichselöffnung ab. Unter Umständen ist an dieser Stelle eine Verstärkung der Seitenwand erforderlich. In dieser Ausführung kann die Deichsel gegenüber der Fahrebene geschwenkt werden und sich damit auf die Größe und Haltung des ziehenden Menschen einstellen.

Nicht möglich ist es, mit dieser Ausführungsform der Deichsel die Rollpalette zu schieben. Dafür ist im Innenraum der Deichsel hinter der Deichselöffnung die Anbringung einer Andruckleiste auf der Bodenplatte erforderlich, an welche der Bolzen oder das T-Stück der Deichsel angedrückt wird und dadurch eine Druckkraft auf die Rollpalette überträgt.

Eine weitere, sinnvolle Ausführungsvariante ist es, am Ende der Deichsel eine kugelförmige Verbreiterung anzubringen. Ebenso wie alle zuvor geschilderten Varianten könnte auch diese Deichselform aus Metall und/oder Kunststoff ausgeführt werden, besonders vorteilhaft ist sie jedoch als Holzteil. Als Gegenstück in der Rollpalette schlägt die Erfindung eine schlüssellochförmige Ausformung der Deichselöffnung vor. Dieses Schlüsselloch sollte mit seinem oberen, großen Teil das Hineinstecken der Kugel ermöglichen, in seinem unteren Teil jedoch so schmal sein, dass die Kugel nicht mehr hindurchrutschen kann, sondern die Zugkraft der Deichsel auf die Seitenwand der Rollpalette überträgt.

Da die Deichsel im Betrieb schräg zur Bodenplatte der Rollpalette ausgerichtet ist, wird auch die Zugkraft schräg zur Bodenpalette orientiert sein. Die Zugkraft gliedert sich auf in eine horizontale Komponente, mit der die Kugel gegen die Seitenwand gedrückt wird und eine vertikale Komponente, mit der die Kugel nach oben bewegt wird. Diese vertikale Bewegung würde dazu führen, dass die Kugel nach oben gleitet und durch den oberen Teil der Deichselöffnung wieder austritt. Um diese Bewegung zu blockieren, beschreibt die Erfindung einen Sperrriegel, der vor den großen, oberen Teil der Deichselöffnung geschoben wird und sie dadurch verschließt. Damit wird der Kugelkopf auf den unteren, schmalen Teil der Deichselöffnung beschränkt und kann dort die Zugkraft übertragen. Um auch die Übertragung von Schubkräften zu ermöglichen, schlägt die Erfindung vor, dass der Sperrriegel an seiner Unterseite mit einer Druckplatte erweitert wird. Dadurch erhält der Sperrriegel im Querschnitt ein L-förmiges Profil, das im unteren Teil eine Kammer für die Kugel bildet. In dieser Kugelkammer ist die Kugel mit Spiel bewegbar. Für das Ziehen der Rollpalette drückt die Kugel auf die Innenseite der Seitenwand neben der Deichselöffnung, für das Schieben der Rollpalette auf den unteren Teil des Sperrriegels. Nach Lösen des Sperrriegels kann die Deichsel in den Innenraum der Palette eingeschoben werden, um dort gelagert zu werden. Damit sie beim Einstecken nicht vollständig in der Rollpalette verschwindet, ist es sinnvoll, dass am anderen Ende der Deichsel ein Griff, ein Bolzen, eine Scheibe oder ein anderes Element angebracht ist, das das vollständige Eindringen der Deichsel in den Innenraum blockiert.

Als Alternative zu den zuvor beschriebenen, verschwenkbaren Befestigungen der Deichsel ist es möglich, die Deichsel aus zwei, gegeneinander verschwenkbaren Teilen aufzubauen. Der eine Teil wird fest an der Rollpalette fixiert, der andere, verschwenkbare Teil vom Bedienmann geführt.

Wie erwähnt, sollte die Deichsel am anderen, von der Palette wegweisenden Ende einen Handgriff aufweisen. Er kann gebildet werden, indem die Deichsel ein L-förmiges oder T-förmiges oder O-förmiges Ende aufweist. Die quer zur Deichsel ausgerichteten Teile sollten bevorzugt auf die Breite von wenigstens einer, besser zwei menschlichen Händen angepasst werden. Prinzipiell ist jedoch auch jede andere Form und Dimension möglich.

Wenn die Deichsel mit einem Handgriff ausgerüstet ist und in den Hohlraum der Rollpalette eingeschoben werden soll, ist es sinnvoll, in diesem Bereich die Seitenwand etwas weiter nach innen, entfernt von der Außenkante der Bodenplatte zu versetzen. Dann findet der Handgriff auf der Fläche zwischen der versetzten Seitenwand und der Außenkante Platz.

Das Hauptmerkmal der Rollpalette ist die Rollbarkeit. Zum Weiterrollen der Palette ist diese Eigenschaft ein entscheidender Vorzug. Beim Abstellen der Palette auf einer geneigten Ebene oder wenn das Risiko besteht, das an die abzustellende Palette andere Paletten oder andere Teile anstoßen könnten, kann die Rollbarkeit jedoch auch von Nachteil sein. Für diesen Betriebszustand schlägt die Erfindung die Anbringung eines Schwenkfußes vor. Als eine denkbare, einfache Ausführungsform wird eine rechteckige Platte vorgeschlagen, die in der Nähe des Mittelpunktes einer Längsseite mit einer Schwenkachse versehen wird, die senkrecht zur Platte ausgerichtet ist. Sie dient zur verschwenkbaren Befestigung des Schwenkfußes an der Seitenwand der Rollpalette. Weil die Verschwenkachse außerhalb des Schwerpunktes angeordnet ist, sorgt die Schwerkraft dafür, dass der Schwenkfuß im unbelasteten Zustand stets eine stabile Position einnimmt.

Der Schwenkfuß sollte so angeordnet werden, dass er in seiner Ruheposition nicht über die Seitenwand hinausragt, denn so behindert er die Verfahrbarkeit der Rollpalette nicht. Damit seine Stützfunktion schnell und einfach aktiviert werden kann, sollte eine Längsseite des rechteckigen Schwenkfußes mit geringem Abstand parallel zur Unterkante eine Seitenwand ausgerichtet werden. Sobald die Rollpalette auf der Fahrebene fixiert werden soll, muss sie etwas angehoben werden und der Schwenkfuß um 90° verschwenkt werden. Dann ist der rechteckige Schwenkfuß vertikal ausgerichtet und ragt nach unten hin über die Rollpalette hinaus auf die Fahrebene. Die Länge und der Befestigungspunkt des Schwenkfußes sind so zu wählen, dass der Schwenkfuß in vertikaler Position weiter nach unten ragt als die Laufrollen. Dann steht die Rollpalette fest auf einer Schmalseite des Schwenkfußes und die Laufrollen berühren nicht mehr die Fahrebene.

Falls die beladene Rollpalette so schwer werden kann, dass ein manuelles Anheben nicht mehr möglich ist, ist es denkbar, den Schwenkfuß mit einem Gegenstück für die Deichsel auszustatten. Dann kann die Deichsel als Hebelarm am Schwenkfuß angesetzt werden. Dadurch wird die Betätigungskraft reduziert und der Betätigungsweg verlängert. Für diese Art der Betätigung muss der Schwenkfuß so angeordnet werden, dass die Deichsel eingesetzt werden kann und den erforderlichen Bewegungsraum für eine 90° Verschwenkung vorfindet.

Da der Schwenkfuß in dieser Betriebsart zusätzlich als Hebegerät genutzt wird, ist es sinnvoll, diejenige Kante der rechteckigen Platte, die auf den Boden auftrifft und sich darauf abrollt, etwas abzurunden, jedoch nur soweit dass an der Schmalseite der rechteckigen Platte noch eine ausreichende Standfläche verbleibt.

Als weiteres Ausstattungsdetail wird vorgeschlagen, dass in die Seitenwände in der Nähe der Ecken der Rollpalette jeweils paarweise Öffnungen eingebracht werden, durch die ein Gurt und/oder ein Seil zur Befestigung des Ladegutes gezogen werden kann.

Im Folgenden sollen weitere Einzelheiten und Merkmale der Erfindungen anhand von Beispielen näher erläutert werden. Diese sollen die Erfindung jedoch nicht einschränken, sondern nur erläutern.

Es zeigt in schematischer Darstellung:
- **Figur 1**: Schrägbild einer Rollpalette mit gläserner Deckplatte
- **Figur 2**: Längsschnitt einer Rollpalette im Bereich einer Deichselöffnung
- Figur 3: Seitenansicht einer Rollpalette mit Schwenkfuß und Laufrolle

Die Figuren zeigen im Einzelnen:

In Figur 1 ist in dreidimensionaler Darstellung eine Rollpalette mit einer gläsern dargestellten Deckeplatte 3 gezeichnet. Aus mehreren rechteckförmigen Profilleisten 2 sind die Seitenwände 1 geformt. Im Inneren der Rollpalette sind Versteifungsleisten 7 montiert, die im gezeichneten Beispiel aus den gleichen Profilleisten 2 wie die Seitenwände 1 bestehen. Die Deckplatte 3 ist durchsichtig dargestellt und mit einer gestrichelten Linie gekennzeichnet. An der Deckplatte 3 sind im gezeichneten Beispiel 6 Stück Laufrollen 5 befestigt. Die ragen nach unten hin durch die Budenöffnungen 41 der Bodenplatte 4 hindurch, so dass die Laufflächen 51 unterhalb der Bodenplatte 4 die Fahrebene 6 berühren.

An der linken Längsseite sind zwei Gabelöffnungen 11 zu erkennen, die durch Weglassen der Profilleisten 2 in Teilbereichen der Seitenwand gebildet sind. Durch diese Öffnungen hindurch werden die Gabeln eines Gabelstaplers oder eines Hubfahrzeuges in den Innenraum der Rollpalette eingeführt. In Figur 1 ist zu erkennen, dass hinter den Gabelöffnungen 11 keine Einbauten den Weg der Gabel in den Innenraum behindern. Ein paar Laufrollen 5 sowie eine Versteifungsleiste 7 sind zwischen den Gabeln angeordnet.

An der linken Längsseite und der vorderen Querseite sind Greiföffnungen 12 gezeichnet. In der dargestellten Ausführungsform sind Sie oval geformt, wobei das Oval horizontal angeordnet ist, denn diese Ausrichtung ist am besten der natürlichen Haltung der menschlichen Hand beim Hochheben von Gegenständen angepasst. In Figur 1 wird nachvollziehbar, wie ein Bedienmann seine beiden Hände in die beiden Greiföffnungen 12 an der Seitenwand einstecken kann, um die gesamte Palette anzuheben.

In Figur 1 ist in der Mitte der Stirnseite 1 eine rechteckige Deichselöffnung 13 eingezeichnet. In dem hier dargestellten Beispiel ist hinter der Deichselöffnung 13 ein Hohlprofil angeordnet, das zur Befestigung der Deichsel dient.

An der in Figur 1 oben eingezeichneten Seitenwand 1 ist eine andere Ausführungsform für die Verbindung der Deichsel 8 mit der Seitenwand 1 eingezeichnet. Die Deichsel 8 trägt am unteren Ende den bei genauer Betrachtung erkennbaren, kleinen Bolzen 81, der quer zur Deichsel ausgerichtet ist. In der gezeichneten Position ist der Bolzen horizontal ausgerichtet und stützt sich gegen die Innenseite der Seitenwand 1 ab und kann darauf abgerollt werden, so dass die Deichsel 8 mittels des daran befestigten Handgriffes 83 verschwenkbar ist.

In Figur 1 kann nachvollzogen werden, wie die Deichsel von der Rollpalette gelöst werden kann:

Dazu wird sie um ihre Längsachse um 90° verschwenkt, so dass der Bolzen 81 in eine vertikale Position kommt. In dieser Ausrichtung kann er durch die Deichselöffnung 13 hindurch gezogen werden, weil die Deichselöffnung als ein vertikal ausgerichteter Schlitz geformt ist.

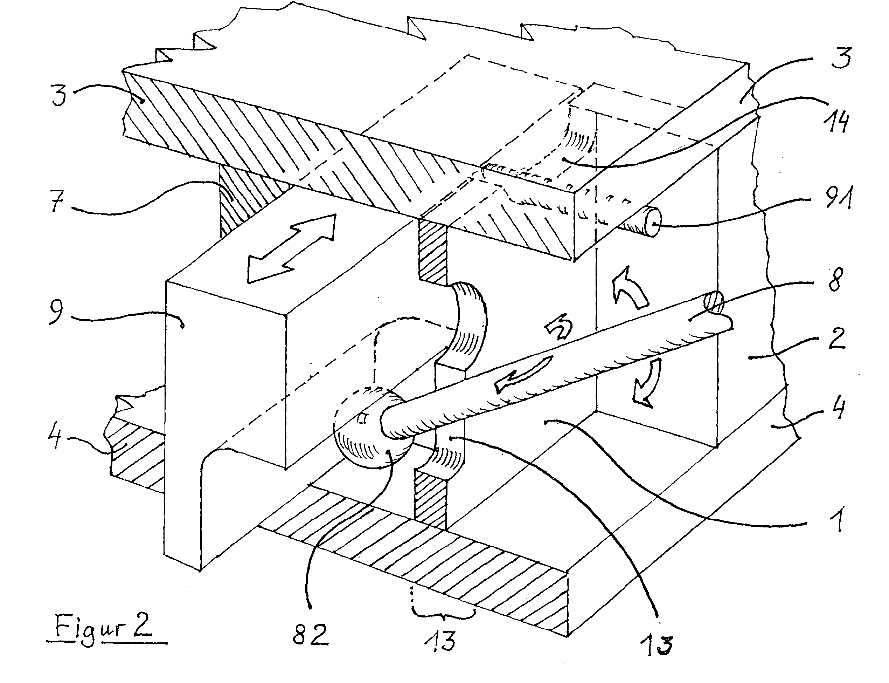

In Figur 2 ist eine andere Ausführungsvariante für die Befestigung der Deichsel 8 gezeichnet. Figur 2 stellt einen sehr kleinen Ausschnitt aus einer Rollpalette dar. Und zwar ist die Rollpalette auf einer Achse vertikal geschnitten, die senkrecht zu einer Seitenwand 2 verläuft. Im gezeichneten Beispiel ist in Bildmitte eine schlüssellochförmige Deichselöffnung 13 zu erkennen, von der nur eine Hälfte dargestellt ist. Die Deichselöffnung besteht aus einem oberen, in diesem Beispiel etwa kreisförmigen Teil, durch welchen die kugelförmige Verbreiterung 82 am unteren Ende der Deichsel 8 hindurchgezogen oder - geschoben werden kann. Der untere Teil der schlüssellochförmigen Deichselöffnung 13 ist so schmal, dass die kugelförmige Verbreiterung 82 nicht hindurch passt, aber die Deichsel 8 darin beweglich ist und auch um ein gewisses Maß seitlich verschwenkbar ist. Diese Verschwenkbewegungen der Deichsel 8 in horizontaler und vertikaler Richtung sind jeweils durch ein Pfeilpaar angedeutet. Im Beispiel der Figur 2 ist die Seitenwand 1, in der die schlüssellochförmige Deichselöffnung 13 eingebracht ist, von der Außenkante der Bodenplatte 4 und der Deckplatte 3 weg verschoben und weiter innen befestigt. Dadurch verbleibt eine Nische an der Seitenfläche der Rollpalette, die für die Aufnahme eines (hier nicht gezeichneten) Handgriffes 83 vorgesehen ist.

Bei Betrachtung von Figur 2 wird deutlich, dass die kugelförmige Verbreiterung 82 am Ende der Deichsel 8 durch Aufbringung einer Zugkraft auf die Deichsel 8 in der eingezeichneten Richtung mit etwa 45° Winkel zu Boden und Deckplatte dazu führen würde, dass die kugelförmige Verbreiterung an der Innenseite der Seitenwand hinter dem unteren Teil der Deichselöffnung 13 entlang gleitet und durch den oberen Teil der schlüssellochförmigen Öffnung 13 wieder austreten würde. Um dies zu verhindern, ist der Sperrriegel 9 aktiviert. In Figur 2 ist ersichtlich, wie der Sperrriegel 9 mit seinem oberen Teil den oberen Teil der schlüssellochförmigen Öffnung 13 verschließt und wie er mit seinem unteren, eingezogenen Teil die kugelförmige Verbreiterung 82 umschließt und sie daran hindert, nach oben zu gleiten - bei einer Zugeinwirkung auf die Deichsel - und wie der Sperrriegel bei Druck auf die Deichsel ein Abgleiten nach innen blockiert.

Zur Aktivierung des Sperrriegels ist eine Schiebestift 91 erkennbar, der unterhalb der Deckplatte 3 angeordnet ist und in einem Schlitz 14 an der Oberkante der Seitenwand 1 bewegbar ist.

Die Funktion des Sperrriegels 9 ermöglicht zum einen die Demontage der Deichsel 8. Zum anderen wird durch Zurückziehen des Sperrriegels 9 in Pfeilrichtung der Weg für die Deichsel 8 in den Innenraum hinein freigemacht. In Figur 2 ist nachvollziehbar, wie sich die Deichsel 8 durch eine Öffnung in der Versteifungsleiste 7 hinter dem Sperrriegel 9 in den Innenraum der Rollpalette hineinbewegen kann.

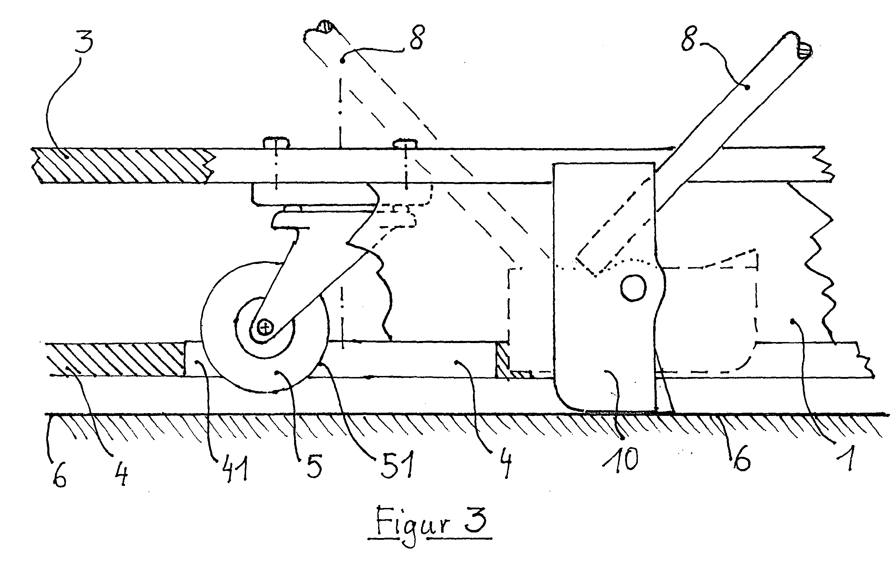

In **Figur 3** ist der Ausschnitt einer Seitenansicht einer erfindungsgemäßen Rollpalette gezeichnet. Im linken Bereich von Figur 3 ist die Seitenwand 1 weggebrochen dargestellt, so dass die dahinter angeordnete Laufrolle 5 sichtbar wird. Erkennbar ist, wie die Laufrolle 5 an der Unterseite der Deckplatte 3 befestigt ist. Deutlich wird auch die Dimensionierung der Bauhöhe der Rollpalette im Verhältnis zur Bauhöhe der Laufrolle. Diese Abmessungen sind so aufeinander abgestimmt, dass die Laufrolle 5 nur mit einem Teil durch die BodenÖffnung 51 in der Bodenplatte 4 hindurch ragt und um einen kleinen Betrag näher an der Fahrebene 6 ist als die Bodenplatte. In dem linken Teil der Figur 3 ist die Rollpalette beschnitten dargestellt, so dass in der Bodenplatte 4 die Bodenöffnung sichtbar wird, innerhalb derer die Laufrolle 5 um eine senkrecht zur Deckplatte orientierte Achse verschwenkbar ist.

In Figur 3 berührt die Lauffläche 51 jedoch nicht die Fahrebene 6, weil die Rollpalette durch einen Schwenkfuß 10 angehoben ist. Im gezeichneten Beispiel besteht der Schwenkfuß 10 aus einem rechteckigen Körper der um eine senkrecht zur Seitenwand ausgerichtete Achse verschwenkbar ist. Er ist mit durchgezogenen Linien in der Standposition gezeichnet und - um 90° verschwenkt - in der Fahrposition.

In Figur 3 wird nachvollziehbar, dass der Schwenkfuß durch die Anordnung der Verschwenkachse außerhalb des Schwerpunktes von der auf ihn einwirkenden Schwerkraft in eine stabile Position gedreht wird, in welcher er nicht über die Seitenwand 1 hinausragt, also die Verfahrbarkeit der Rollpalette nicht behindert. In dieser Position des Schwenkfußes ist die Lauffläche der Laufrolle der tiefste Punkt und die Rollpalette ist ungehindert bewegbar. Für Fälle in denen jedoch eine Blockierung der Rollpalette erforderlich ist, kann der Schwenkfuß aus der gestrichelt gezeichneten Fahrposition in die durchgezogen gezeichnete Standposition verschwenkt werden. In Figur 3 wird nachvollziehbar, dass dazu die Rollpalette etwas angehoben werden muss.

Eingezeichnet ist jedoch auch eine andere Alternative zur Verschwenkung, nämlich durch Nutzung der Deichsel 8 als Hebel. Aus der Ruheposition wird im gezeichneten Beispiel der Schwenkfuß zur Aktivierung im Uhrzeigersinn verschwenkt. Im Zuge dieser Bewegung berührt als erstes die abgerundete Ecke die Fahrebene 6 bei Fortsetzung der Schwenkbewegung rollt sich der Schwenkfuß auf seiner abgerundeten Ecke auf der Fahrebene ab und hebt dabei gleichzeitig die Rollpalette an. Kurz vor Erreichen der Standposition erreicht die Rollpalette ihren höchsten Punkt und wird beim Fortsetzen der Drehung wieder etwas absinken. Nach einer Drehung um genau 90° wird dann eine stabile Position des Schwenkfußes erreicht, in welcher er mit seiner Schmalseite ganzflächig auf der Fahrebene 6 aufliegt und die Rollpalette gegen unbeabsichtigtes Verrollen absichert.

## Patentansprüche

1. Rollpalette zum Transportieren und zum Stapeln von darauf befindlichen Gütern, bestehend aus einem quaderförmigen und plattenförmigen Hohlkörper, dessen Seitenwände 1 aus vier länglichen Profilleisten 2 mit vorzugsweise rechteckigem Querschnitt aufgebaut sind, auf deren Oberseiten eine Deckplatte 3 und auf deren Unterseiten eine Bodenplatte 4 befestigt ist
**dadurch gekennzeichnet, dass**
in wenigstens einer Seitenwand 1 eine Öffnung eingebracht ist und
im Innenraum an der Unterseite der Deckplatte 3 wenigstens drei Laufrollen 5 befestigt sind, die durch Bodenöffnungen 41 in der Bodenplatte 4 hindurch nach unten ragen und
die alle mit ihren Laufflächen 51 auf eine zur Bodenplatte 4 etwa parallele Fahrebene 6 ausgerichtet sind.

2. Rollpalette nach Anspruch 1, **dadurch gekennzeichnet, dass** im Innenraum Versteifungsleisten 7 die Deckplatte 3 und die Bodenplatte 4 miteinander verbinden.

3. Rollpalette nach einem der vorhergehenden Ansprüche, **dadurch gekennzeichnet, dass** in wenigstens einer Seitenwand 1 vorzugsweise in der Mitte wenigstens eine Gabelöffnung 11 eingebracht ist, durch welche die Gabeln eines Stapelfahrzeuges, wie z.B. eines Hubwagens oder eines Gabelstaplers, in den Innenraum des Hohlkörpers einschiebbar sind und/oder wenigstens eine Greiföffnung 12 eingebracht ist.

4. Rollpalette nach einem der vorhergehenden Ansprüche, **dadurch gekennzeichnet, dass** in wenigstens einer Seitenwand 1, bevorzugt in deren Mitte, eine Deichselöffnung 13 eingebracht ist und eine längliche Deichsel 8 vorhanden ist, welche durch die Deichselöffnung 13 teilweise in den Innenraum des Hohlkörpers einbringbar ist und dort mit einem Ende fixierbar ist.

5. Rollpalette nach Anspruch 4, **dadurch gekennzeichnet, dass** die Deichsel 8 im Innenraum
durch ein Gewinde oder
durch einen Bajonettverschluss oder
durch ein längliches Hohlprofil
fixierbar ist.

6. Rollpalette nach Anspruch 4, **dadurch gekennzeichnet, dass** die Deichsel 8 im Innenraum
durch einen quer zur Deichsel ausgerichteten Bolzen 81
oder durch eine L- oder S- oder T-förmige Ausbildung des Deichselendes
an der Innenseite der Seitenwand 1 neben der Deichselöffnung 13 und/oder an einem komplementär zum Ende der Deichsel 8 geformten Bauteil fixierbar ist.

7. Rollpalette nach Anspruch 4, **dadurch gekennzeichnet, dass** die Deichsel 8 in der Deichselöffnung 13 in einer bestimmten Winkelstellung einklemmbar ist.

8. Rollpalette nach Anspruch 4, **dadurch gekennzeichnet, dass** die Deichsel 8 an dem der Palette nahen Ende eine kugelförmige Verbreiterung 82 trägt.

9. Rollpalette nach Anspruch 8, **dadurch gekennzeichnet, dass** die Deichselöffnung 13 wie ein Schlüsselloch geformt ist, und zwar im unteren Teil etwas breiter als die Deichsel 8, jedoch schmäler als die Verbreiterung 82
und durch den oberen Teil der Deichselöffnung 13 die Verbreiterung 82 in den Innenraum einschiebbar ist
und der obere Teil der Deichselöffnung 13 durch einen verschiebbaren Sperrriegel 9 verschließbar ist, der durch einen Schlitz 14 in der Seitenwand und einen da hindurch ragenden Schiebestift 91 von außen betätigbar ist.

10. Rollpalette nach Anspruch 9, **dadurch gekennzeichnet, dass** durch
den Sperrriegel 9 auch der untere Teil der Deichselöffnung 13 zum Innenraum hin verschließbar ist,
wobei zwischen dem unteren Teil der Deichselöffnung und dem Sperrriegel 9 eine Kugelkammer 92 gebildet wird, welche etwas größer als die Verbreiterung 82 ist
und wobei sich der Sperrriegel 9 mit seiner dem Innenraum zugewandten Seite auf einer Versteifungsleiste 7 abstützt, welche im Bereich hinter der Deichselöffnung 13 eine Öffnung aufweist, durch welche die Verbreiterung 82 hindurch schiebbar ist.

11. Rollpalette nach einem der vorhergehenden Ansprüche, **dadurch gekennzeichnet, dass** die Deichsel aus zwei gegeneinander verschwenkbaren Teilen besteht.

12. Rollpalette nach einem der vorhergehenden Ansprüche, **dadurch gekennzeichnet, dass** an dem von der Palette weg weisenden Ende der Deichsel 8 ein Handgriff 83 befestigt ist, welcher eine L-förmige oder T-förmige oder O-förmige Fortsetzung der Deichsel bildet.

13. Rollpalette nach Anspruch 12, **dadurch gekennzeichnet, dass**
im Bereich der Deichselöffnung 13 die Seitenwand 1 zu einem Teil nach innen versetzt ist und
zwischen dem versetzten Teil der Seitenwand und den Aussenkanten von Bodenplatte 4 und Deckplatte 3 der Handgriff 83 einschiebbar ist.

14. Rollpalette nach einem der vorhergehenden Ansprüche, **dadurch gekennzeichnet, dass** alle Laufrollen 5,
welche nahe zu der der Deichselöffnung 13 gegenüberliegenden Seitenwand 1 auf einer dazu parallelen Linie angeordnet sind, nur in einer senkrecht zu dieser Seitenwand 1 verlaufenden Richtung bewegbar sind
und alle anderen Laufrollen 5 um eine zur Fahrebene 6 senkrechte Achse verschwenkbar sind.

15. Rollpalette nach einem der vorhergehenden Ansprüche, **dadurch gekennzeichnet, dass** ein rechteckiger, plattenförmiger Schwenkfuß 10 an einer Seitenwand 1 verschwenkbar befestigt ist,
wobei die Schwenkachse senkrecht zur Platte verläuft und nahe beim Mittelpunkt einer Längsseite des Rechteckes angeordnet ist und senkrecht zur Seitenwand 1 ausgerichtet ist
und im eingeschwenkten Zustand der Schwenkfuß 10 horizontal ausgerichtet ist und dabei vollflächig auf der Seitenwand 1 aufliegt und im ausgeschwenkten Zustand vertikal ausgerichtet ist und mit einem Teil seiner Fläche über die Unterseite der Bodenplatte 4 hinaus ragt.

16. Verfahren zum Stapeln von beladenen Rollpaletten nach den vorhergehenden Ansprüche, **dadurch gekennzeichnet, dass** auf eine erste, beladene Rollpalette, deren Nutzlast mit aufgeschäumtem Kunststoff verpackt ist und eine etwa ebene Oberseite bildet eine oder mehrere, gleichartige Rollpaletten direkt aufgesetzt werden.
